# EUROPÄISCHE PATENTSCHRIFT

(11) **EP 3 192 226 B1**
(45) Veröffentlichungstag und Bekanntmachung des Hinweises auf die Patenterteilung: **27.02.2019**
(21) Anmeldenummer: 15756668.8
(22) Anmeldetag: 02.09.2015
(51) Int. Cl.: H04L 29/06, H04L 12/715

(54) **VORRICHTUNG UND VERFAHREN ZUR STEUERUNG EINES KOMMUNIKATIONSNETZWERKS**
DEVICE AND METHOD FOR CONTROLLING A COMMUNICATION NETWORK
DISPOSITIF ET PROCÉDÉ DE COMMANDE D'UN RÉSEAU DE COMMUNICATION

(30) Priorität: 08.09.2014 DE 102014217944; 06.05.2015 DE 102015107073
(43) Veröffentlichungstag der Anmeldung: 19.07.2017
(60) Teilanmeldung: 18202088.3
(73) Patentinhaber: Rheinmetall Defence Electronics GmbH, 28309 Bremen (DE)
(72) Erfinder: STEHMEIER, Henrich, 28309 Bremen (DE)
(74) Vertreter: Horn Kleimann Waitzhofer Patentanwälte PartG mbB
(86) Internationale Anmeldenummer: PCT/EP2015/070057
(87) Internationale Veröffentlichungsnummer: WO 2016/037917

(56) Entgegenhaltungen:
- DE-B3-102015 107 071
- ZHOU HAIFENG ET AL: "Evolving defense mechanism for future network security", IEEE COMMUNICATIONS MAGAZINE, IEEE SERVICE CENTER, PISCATAWAY, US, Bd. 53, Nr. 4, 8. April 2015 (2015-04-08), Seiten 45-51, XP011577593, ISSN: 0163-6804, DOI: 10.1109/MCOM.2015.7081074 [gefunden am 2015-04-06]
- KAMPANAKIS PANOS ET AL: "SDN-based solutions for Moving Target Defense network protection", PROCEEDING OF IEEE INTERNATIONAL SYMPOSIUM ON A WORLD OF WIRELESS, MOBILE AND MULTIMEDIA NETWORKS 2014, IEEE, 19. Juni 2014 (2014-06-19), Seiten 1-6, XP032656398, DOI: 10.1109/WOWMOM.2014.6918979 [gefunden am 2014-10-08]

## Beschreibung

Die vorliegende Erfindung betrifft eine Vorrichtung zur Steuerung eines Kommunikationsnetzwerks mit einer Mehrzahl von Endgeräten zur Datenkommunikation. Ferner betrifft die vorliegende Erfindung einen Router mit einer solchen Vorrichtung, einen Switch mit einer solchen Vorrichtung, eine Firewall mit einer solchen Vorrichtung sowie ein Kommunikationsnetzwerk mit einer solchen Vorrichtung. Des Weiteren betrifft die vorliegende Erfindung ein Verfahren und ein Computerprogrammprodukt zur Steuerung eines Kommunikationsnetzwerks.

Das technische Gebiet der vorliegenden Erfindung betrifft die Sicherheit (IT-Sicherheit) von Kommunikationsnetzwerken, z. B. von Kommunikationsnetzwerken von Unternehmen, Universitäten, Behörden und anderen Organisationen.

Kommunikationsnetzwerke von Unternehmen und dergleichen werden immer häufiger von Angreifern ins Visier genommen, um sie insbesondere auszuspionieren. Dabei werden die Bedrohungsszenarien für die Kommunikationsnetzwerke immer spezialisierter, sind häufig langfristig ausgelegt und verwenden hochspezielle Tarntechniken. Häufig suchen die Angreifer bei ihren Angriffen auf die Kommunikationsnetzwerke von Unternehmen und dergleichen gezielt nach Schwachstellen in ihrer Sicherheitsstrategie.

Herkömmliche Sicherheitslösungen, wie Firewalls, IPS- und Antiviruslösungen sowie Web-Gateways, sind darauf ausgelegt, bekannte Angriffsmuster unter Verwendung von signaturabhängigen Sicherheitsmaßnahmen ausfindig zu machen. Neuere Generationen von Angriffen sind allerdings nicht auf bekannte Angriffsmuster eingeschränkt, sondern sind dynamisch. Beispielsweise werden dabei Ziele über mehrere Angriffsvektoren und Phasen hinweg verfolgt, wodurch das Bedrohungspotential für Unternehmensnetzwerke drastisch ansteigt.

Dabei haben herkömmliche statische Netzwerkkonfigurationen den Nachteil, ein einfacheres Ziel beim Ausspähen und Angreifen durch Angreifer, wie nicht-autorisierte Einrichtungen, zu sein.

In dem Dokument ZHOU HAlFENG ET AL: "Evolving defense mechanism for future network security", IEEE COMMUNICATIONS MAGAZINE, IEEE SERVICE CENTER, PISCATAWAY, US, Bd. 53, Nr. 4, 8. April 2015 (2015-04-08), Seiten 45-51, XP011577593, ISSN: 0163-6804, DOI: 10.1109/MCOM.2015.7081074 ist eine Steuerung eines Kommunikationsnetzes mit einem SDN-Controller beschrieben. Hierbei wird eine Netzwerkkonfigurationsänderungsstrategie in Abhängigkeit von Vorgaben des Systems und des Nutzers eingesetzt.

In dem Dokument KAMPANAKIS PANOS ET AL: "SDN-based solutions for Moving Target Defense network protection", PROCEEDING OF IEEE INTERNATIONAL SYMPOSIUM ON A WORLD OF WIRELESS, MOBILE AND MULTIMEDIA NETWORKS 2014, IEEE, 19. Juni 2014 (2014-06-19), Seiten 1-6, XP032656398, DOI: 10.1109/WOWMOM.2014.6918979 sind SDN-basierte Lösungen für einen defensiven Netzwerkschutz gegen sich bewegende Ziele beschrieben.

Vor diesem Hintergrund besteht eine Aufgabe der vorliegenden Erfindung darin, ein sichereres Kommunikationsnetzwerk bereitzustellen.

Gemäß einem ersten Aspekt wird eine Vorrichtung zur Steuerung eines Kommunikationsnetzwerks mit einer Mehrzahl von Endgeräten zur Datenkommunikation vorgeschlagen. Die Vorrichtung umfasst eine Steuereinheit, welche dazu eingerichtet ist, eine Datenebene und eine Steuerebene der Datenkommunikation zu entkoppeln und zumindest eine von außerhalb des Kommunikationsnetzwerks sichtbare Eigenschaft des Kommunikationsnetzwerks während einer Kommunikationssitzung unter Nutzung der entkoppelten Steuerebene zu modifizieren.

Dadurch, dass die Steuereinheit die zumindest eine von außerhalb des Kommunikationsnetzwerks sichtbare Eigenschaft des Kommunikationsnetzwerks während einer jeden Kommunikationssitzung modifiziert, insbesondere dynamisch modifiziert, kann ein außenstehender Betrachter oder Angreifer des Kommunikationsnetzwerks das Kommunikationsnetzwerk praktisch nicht ausspähen, da die Konfiguration und damit das Aussehen des Kommunikationsnetzwerks für den außenstehenden Betrachter unfeststellbar und unvorhersagbar sind. Zusätzlich oder alternativ können auch sichtbare Datenmuster des Kommunikationsnetzwerks modifiziert werden. Hierdurch wird die Sicherheit des Kommunikationsnetzwerks erhöht.

Beispiele für die zumindest eine Eigenschaft des Kommunikationsnetzwerks, welche von der Steuereinheit modifizierbar ist, sind die Änderung von virtuellen Adressen von Endgeräten des Kommunikationsnetzwerks, die Änderung der Konfiguration des Kommunikationsnetzwerks, die Änderung des Routingverhaltens des Kommunikationsnetzwerks, und die Änderung von Applikationen und/oder deren Portzuordnungen.

Unter einer Kommunikationssitzung oder Sitzung (Session) wird eine Kommunikation zwischen einem der Endgeräte des Kommunikationsnetzwerks mit einer Einrichtung außerhalb des Kommunikationsnetzwerks oder innerhalb des Kommunikationsnetzwerks verstanden. Die Kommunikationssitzung kann auch auf zustandslosen Protokollen, wie z. B. HTTP (Hypertext Transfer Protocol), basieren.

Die Steuereinheit kann hardwaretechnisch und/oder auch softwaretechnisch implementiert sein. Bei einer hardwaretechnischen Implementierung kann die Steuereinheit als Vorrichtung oder als Teil einer Vorrichtung, zum Beispiel als Computer oder als Mikroprozessor oder als Router oder Switch ausgebildet sein. Bei einer softwaretechnischen Implementierung kann die Steuereinheit als Computerprogrammprodukt, als eine Funktion, als eine Routine, als Teil eines Programmcodes oder als ausführbares Objekt ausgebildet sein.

Ein geeignetes Werkzeug zur Implementierung der Steuereinheit ist der Open-Source SDN-Controller OpenMUL (siehe Referenz [1]). Der OpenMUL-Controller stellt eine, in C implementierte, SDN/OpenFlow basierte Controller Plattform zur Verfügung. Dabei ist die Steuereinheit vorzugsweise dazu eingerichtet, OpenFlow (siehe Referenz [2]) sowie die Technik Moving-Target-Defence (MTD) (siehe Referenz [3]) zu verwenden. Durch die Verwendung von Moving-Target-Defence ist die Steuereinheit insbesondere dazu eingerichtet, das Kommunikationsnetzwerk dynamisch zu modifizieren. OpenFlow ist ein Kommunikationsprotokoll, welches Zugriff auf die Hardwarekomponenten eines Switches oder Routers liefert, welche die Verarbeitung eintreffender Netzwerkpakete durchführen (die sogenannte Forwarding Plane (Weiterleitungsebene)).

Die Vorrichtung selbst kann hardwaretechnisch und/oder softwaretechnisch implementiert sein. Bei einer hardwaretechnischen Implementierung der Vorrichtung kann diese beispielsweise als Computer, als Teil eines Routers, als Teil eines Switchs oder als Teil einer Firewall ausgebildet sein. Bei einer softwaretechnischen Implementierung kann die Vorrichtung als Computerprogrammprodukt, als eine Funktion, als eine Routine, als Teil eines Programmcodes oder als ausführbares Objekt ausgebildet sein.

Das Kommunikationsnetzwerk kann auch als Netzwerk oder Rechnernetz bezeichnet werden und ist beispielsweise ein LAN (Local Area Network) oder ein WAN (Wide Area Network).

Die Entkopplung von Datenebene und Steuerebene der Datenkommunikation kann beispielsweise durch Software-Defined-Networking bereitgestellt werden (siehe Referenzen [4] und [5]).

Beispiele für Endgeräte des Kommunikationsnetzwerks sind Rechner, Computer, Router, Switches, Firewalls, eingebettete Systeme oder dergleichen.

Die Steuereinheit ist dazu eingerichtet, die zumindest eine von außerhalb des Kommunikationsnetzwerks sichtbare Eigenschaft des Kommunikationsnetzwerks während der Kommunikationssitzung unter Nutzung der entkoppelten Steuerebene proaktiv zu modifizieren.

Die Steuereinheit ist demnach dazu geeignet, die zumindest eine sichtbare Eigenschaft proaktiv zu modifizieren. Damit wird die zumindest eine Eigenschaft des Kommunikationsnetzwerks modifiziert, sogar bevor eine Bedrohungslage oder ein Schaden an dem Kommunikationsnetzwerk eintritt. Hierdurch kann eine proaktive Echtzeitsicherheit für das Kommunikationsnetzwerk bereitgestellt werden.

Unter proaktivem Modifizieren wird vorliegend insbesondere verstanden, dass die zumindest eine sichtbare Eigenschaft nach Ende eines jeden Datenflusses modifiziert wird. Damit ist die vorliegende Steuereinheit im Gegensatz zu einem herkömmlichen reaktiven Modifizieren bei erkannter Bedrohungslage oder detektiertem Schaden dazu eingerichtet, proaktiv zu modifizieren oder proaktiv und reaktiv zu modifizieren.

Insbesondere ist die Steuereinheit dazu eingerichtet, das Kommunikationsnetzwerk derart proaktiv zu modifizieren, dass unterschiedliche Sicherheitszonen mit unterschiedlichen Sicherheitsstufen und/oder unterschiedlichen Sicherheitsfunktionen dynamisch im Kommunikationsnetzwerk eingerichtet werden können. Beispielsweise abhängig von erkannten Bedrohungsszenarien kann die Steuereinheit die eingerichteten Sicherheitszonen ändern. Ferner ist die Steuereinheit vorzugsweise dazu eingerichtet, dabei einen Tagbetrieb und einen Nachtbetrieb des Kommunikationsnetzwerks einzurichten, welche unterschiedliche Sicherheitsstufen haben.

Gemäß einer weiteren Ausführungsform ist die Steuereinheit dazu eingerichtet, eine virtuelle Adresse zumindest eines der Mehrzahl von Endgeräten während der Kommunikationssitzung unter Nutzung der entkoppelten Steuerebene zu ändern. Eine virtuelle Adresse ist eine logische Adresse, welche von einer logischen Einheit oder Computereinheit in eine physikalische Adresse umgerechnet werden kann.

Gemäß einer weiteren Ausführungsform umfasst die Vorrichtung einen Zufallsgenerator zur Ausgabe eines Zufallswertes. Dabei ist die Steuereinheit dazu eingerichtet, die virtuelle Adresse in Abhängigkeit des von dem Zufallsgenerator ausgegebenen Zufallswertes zu ändern.

Gemäß einer weiteren Ausführungsform ist die Steuereinheit dazu eingerichtet, die Konfiguration des Kommunikationsnetzwerks während der Kommunikationssitzung unter Nutzung der entkoppelten Steuerebene zu modifizieren. Eine Änderung der Konfiguration des Kommunikationsnetzwerks umfasst vorzugsweise eine Änderung der eingerichteten Sicherheitsstufen oder Sicherheitszonen des Kommunikationsnetzwerks. Damit kann die Vorrichtung auf unterschiedliche Angriffsszenarien unterschiedlich durch die Änderung der Konfiguration des Kommunikationsnetzwerks reagieren.

Gemäß einer weiteren Ausführungsform ist die Steuereinheit dazu eingerichtet, ein Routingverhalten des Kommunikationsnetzwerks während der Kommunikationssitzung unter Nutzung der entkoppelten Steuerebene zu modifizieren. Durch die vorgeschlagene Änderung des Routingverhaltens des Kommunikationsnetzwerks kann ein Angreifer aufgrund des Fehlens einer statischen Eigenschaft des Routingverhaltens keine hilfreichen Schlüsse aus einem Aufnehmen oder Loggen des Routingverhaltens des Kommunikationsnetzwerks ziehen.

Gemäß einer weiteren Ausführungsform ist die Steuereinheit dazu eingerichtet, zumindest eine Applikation des Kommunikationsnetzwerks während der Kommunikationssitzung unter Nutzung der entkoppelten Steuerebene zu modifizieren. Durch Änderungen der Applikationen des Kommunikationsnetzwerks kann ein Angreifer keine hilfreichen Informationen über das Kommunikationsnetzwerk ableiten.

Gemäß einer weiteren Ausführungsform ist die Steuereinheit dazu eingerichtet, zumindest eine Portzuordnung der zumindest einen Applikation während der Kommunikationssitzung unter Nutzung der entkoppelten Steuerebene zu modifizieren. Durch Änderungen der Portzuordnung einer Applikation des Kommunikationsnetzwerks kann ein Angreifer keine hilfreichen Informationen über das Kommunikationsnetzwerk ableiten.

Gemäß einer weiteren Ausführungsform ist die Steuereinheit dazu eingerichtet, einen von dem Kommunikationsnetzwerk eingesetzten ersten Kryptoalgorithmus während der Kommunikationssitzung durch einen zweiten Kryptoalgorithmus auszutauschen.

Dabei kann die Steuereinheit den zweiten Kryptoalgorithmus vorzugsweise aus einer Mehrzahl vorbereiteter Kryptoalgorithmen auswählen.

Vorteilhaferweise kann ein Angreifer durch den Austausch der Kryptoalgorithmen nicht wie bei der Nutzung eines statischen Kryptoalgorithmus hilfreiche Informationen über das Kommunikationsnetzwerk ableiten.

Unter einem Kryptoalgorithmus wird ein Algorithmus verstanden, der zumindest einen kryptographischen Wert, zum Beispiel mittels einer kryptographischen Funktion, berechnet. Kryptographische Algorithmen umfassen dabei Verschlüsselungsalgorithmen, zum Beispiel SSL (Secure Sockets Layer), sowie digitale Signaturen. Kryptographische Werte können kryptographische Schlüssel, wie zum Beispiel symmetrische Schlüssel, und/oder Hashwerte umfassen.

Gemäß einer weiteren Ausführungsform ist die Steuereinheit dazu eingerichtet, ein Datenmuster des Kommunikationsnetzwerks, insbesondere ein Nutzdatenprofil zumindest eines der Endgeräte, zu modifizieren.

Durch die Modifikation eines Datenmusters oder mehrerer Datenmuster des Kommunikationsnetzwerks ist es der Steuereinheit ermöglicht, einem Angreifer einen Datenverkehr vorzutäuschen. Der vorgetäuschte Datenverkehr kann auch als Datenattrappe oder Kommunikationsattrappe bezeichnet werden. Ferner ist die Steuereinheit vorzugsweise dazu eingerichtet, die an das Kommunikationsnetzwerk gekoppelten Endgeräte, das heißt Netzwerkendgeräte oder Netzwerkteilnehmer, zu ändern, um so die Datenmuster des Kommunikationsnetzwerks zu modifizieren. Durch die Modifikation der Datenmuster ist es einem Angreifer deutlich erschwert, erfolgreiche Binärmustervergleiche durchzuführen.

Gemäß einer weiteren Ausführungsform umfasst die Kommunikationssitzung eine Mehrzahl von Transaktionen von Daten (Data Flows). Dabei ist die Steuereinheit dazu eingerichtet, die zumindest eine von außerhalb des Kommunikationsnetzwerks sichtbare Eigenschaft des Kommunikationsnetzwerks nach einer Teilmenge der Mehrzahl von Transaktionen zu modifizieren.

Die Teilmenge von Transaktionen, nach der die Steuereinheit die zumindest eine sichtbare Eigenschaft des Kommunikationsnetzwerks modifiziert, kann beispielsweise durch einen Zufallsgenerator getriggert oder spezifiziert werden.

Gemäß einer weiteren Ausführungsform umfasst die Kommunikationssitzung eine Mehrzahl von Transaktionen von Daten, wobei die Steuereinheit dazu eingerichtet ist, die zumindest eine von außerhalb des Kommunikationsnetzwerks sichtbare Eigenschaft des Kommunikationsnetzwerks nach einer jeden der Mehrzahl von Transaktionen zu modifizieren.

Durch die Änderung der Eigenschaft oder Eigenschaften nach einer jeden Transaktion kann der Grad an Sicherheit für das Kommunikationsnetzwerk weiter erhöht werden.

Gemäß einer weiteren Ausführungsform ist die Steuereinheit dazu eingerichtet, die Steuerebene und die Datenebene der Datenkommunikation mittels Software-Defined-Networking zu entkoppeln. Software-Defined-Networking ist ein Ansatz zum Bau von Geräten oder Endgeräten für Kommunikationsnetzwerke und Software, die zwei wesentliche Komponenten, nämlich Daten und Steuerbefehle, voneinander trennt und abstrahiert (siehe hierzu Referenzen [4] und [5]).

Gemäß einer weiteren Ausführungsform umfasst die Vorrichtung einen mit der Steuereinheit gekoppelten Zufallsgenerator. Der Zufallsgenerator ist dazu eingerichtet, die Steuereinheit zur Modifikation der zumindest einen von außerhalb des Kommunikationsnetzwerks sichtbaren Eigenschaft des Kommunikationsnetzwerks zumindest einmal während der Kommunikationssitzung, insbesondere mehrmals während der Kommunikationssitzung, zufällig oder quasi-zufällig zu triggern. Der Zufallsgenerator oder Zufallszahlengenerator generiert eine Abfolge von Zufallswerten oder Zufallszahlen. Der Zufallsgenerator kann als deterministischer Zufallszahlengenerator oder als ein nicht-deterministischer Zufallszahlengenerator ausgebildet sein.

Gemäß einer weiteren Ausführungsform umfasst die Vorrichtung eine erste Schutzeinheit zur Detektion, Isolation und Bekämpfung von Zugriffen von nicht-autorisierten Einrichtungen auf das Kommunikationsnetzwerk. Gemäß dieser Ausführungsform ist die erste Schutzeinheit dazu geeignet, einen Angriff oder Zugriff von einer für das Kommunikationsnetzwerk nicht-autorisierten Einrichtung zu detektieren, den detektierten Angriff in dem Kommunikationsnetzwerk zu isolieren und auch Maßnahmen gegen diesen Angriff zu ergreifen.

Gemäß einer weiteren Ausführungsform umfasst die Vorrichtung eine zweite Schutzeinheit zur Warnung und Alarmierung eines mit der Vorrichtung koppelbaren Auswertesystems. Die zweite Schutzeinheit ist vorteilhafterweise dazu eingerichtet, ein mit der Vorrichtung koppelbares Auswertesystem, welches beispielsweise von einer staatlichen Einrichtung betrieben wird, zu warnen und zu alarmieren.

Gemäß einer weiteren Ausführungsform umfasst die Vorrichtung eine dritte Schutzeinheit zur Wiederherstellung zumindest einer kritischen Netzwerkfunktion.

Dabei kann die dritte Schutzeinheit insbesondere dazu eingerichtet werden, bei Detektion des Ausfalls einer kritischen Netzwerkfunktion zumindest eine redundante Einheit zur Ausführung der kritischen Netzwerkfunktion anzufahren, um die kryptische Netzwerkfunktion wiederherzustellen. Folglich ist die vorliegende Vorrichtung vorteilhafterweise zur automatischen Wiederherstellung kritischer Netzwerkfunktionen geeignet.

Gemäß einer weiteren Ausführungsform umfasst die Vorrichtung eine Analyseeinheit zur Bereitstellung von Analysedaten bei Zugriffen von nicht-autorisierten Einrichtungen auf das Kommunikationsnetzwerk.

Gemäß einer weiteren Ausführungsform umfasst die Vorrichtung eine Datenauswerteeinheit zur Ermittlung von Statusdaten, welche insbesondere zur Angabe einer Sicherheitslage des Kommunikationsnetzwerks geeignet sind, unter Verwendung der bereitgestellten Analysedaten.

Gemäß einer weiteren Ausführungsform umfasst die Vorrichtung eine Schnittstelleneinrichtung zur Übertragung der Statusdaten an ein mit der Vorrichtung koppelbares Auswertesystem. Dabei kann das Auswertesystem mit der Vorrichtung beispielsweise auch über das Internet gekoppelt sein. Die Schnittstelleneinrichtung ist dann dazu eingerichtet, eine kryptographisch geschützte Übertragung zwischen dem Auswertesystem und der Vorrichtung einzurichten. Beispielsweise kann die Schnittstelleneinrichtung auch einen geschützten Kommunikationstunnel zwischen der Vorrichtung und dem Auswertesystem einrichten.

Gemäß einer weiteren Ausführungsform weist das Kommunikationsnetzwerk eine aufeinander aufbauende Schichten umfassende Infrastruktur auf. Die Infrastruktur hat insbesondere die folgenden aufeinander aufbauenden Schichten: Schicht-1, Schicht-2, Schicht-3, Schicht-4, Schicht-5, Schicht-6, Schicht-7. Dabei ist die Steuereinheit als ein die Schicht-2 und die Schicht-3 der Infrastruktur überlagerndes, virtuelles Überlagerungs-Netzwerk (Overlay-Netzwerk) implementiert.

Gemäß einer weiteren Ausführungsform ist das virtuelle Überlagerungs-Netzwerk unter Verwendung von Virtual-Extensible LAN implementiert. Beispielsweise ist das Überlagerungsnetzwerk durch VXLAN (Virtual Extensible LAN) implementiert. VXLAN ist ein Encapsulation-Protokoll, um das Überlagerungsnetzwerk auf einer existierenden Schicht-3-Infrastruktur laufen zu lassen (siehe Referenz [6]).

Gemäß einer weiteren Ausführungsform ist die Steuereinheit in einer Firewall, in einem Switch oder in einem Router des Kommunikationsnetzwerks integriert.

Gemäß einer weiteren Ausführungsform ist die Steuereinheit softwaretechnisch implementiert.

Gemäß einer weiteren Ausführungsform unterstützt die Vorrichtung IPv4 (Internet Protocol Version 4; siehe Referenz [7]) und IPv6 (Internet Protocol Version 6; siehe Referenz [8]).

Gemäß einer weiteren Ausführungsform nutzt die Vorrichtung eine Kombination aus einem Sicherheitsprotokoll und einem Tunneling-Protokoll. Durch die Verwendung des Tunneling-Protokolls kann die Sicherheit der Datenkommunikation weiter erhöht werden.

Ein Beispiel für das Sicherheitsprotokoll ist IPsec (siehe Referenz [9]). Ein Beispiel für das Tunneling-Protokoll ist L2TP (siehe Referenz [10]). Ein weiteres Beispiel für ein geeignetes Tunneling-Protokoll ist Open-VPN (siehe Referenz [11]).

Die jeweilige Einheit, zum Beispiel Analyseeinheit oder Schutzeinheit, kann hardwaretechnisch und/oder auch softwaretechnisch implementiert sein. Bei einer hardwaretechnischen Implementierung kann die Einheit als Vorrichtung oder als Teil einer Vorrichtung, zum Beispiel als Computer oder als Mikroprozessor oder als Switch ausgebildet sein. Bei einer softwaretechnischen Implementierung kann die Einheit als Computerprogrammprodukt, als eine Funktion, als eine Routine, als Teil eines Programmcodes oder als ausführbares Objekt ausgebildet sein.

Gemäß einem zweiten Aspekt wird ein Router für ein Kommunikationsnetzwerk vorgeschlagen, welcher eine Vorrichtung gemäß dem ersten Aspekt oder gemäß einer dessen Ausführungsformen integriert. Unter einem Router wird insbesondere ein Netzwerkgerät verstanden, welches Netzwerkpakete zwischen mehreren Kommunikationsnetzwerken weiterleiten kann. Ein Router kann zur Internetanbindung, zur sicheren Kopplung mehrerer Standorte eines Unternehmens oder zur direkten Kopplung mehrerer lokaler Netzwerksegmente, gegebenenfalls mit Anpassung an unterschiedliche Netzwerkprotokolle, eingesetzt werden.

Gemäß einem dritten Aspekt wird ein Switch für ein Kommunikationsnetzwerk vorgeschlagen, welcher eine Vorrichtung gemäß dem ersten Aspekt oder gemäß einer dessen Ausführungsformen integriert. Unter einem Switch wird ein Kopplungselement verstanden, das Netzwerksegmente miteinander verbinden kann. Es sorgt innerhalb eines Netzwerksegments dafür, dass die Datenpakete an ihr Ziel gelangen. Ein Switch kann auch als Netzwerkweiche oder Verteiler bezeichnet werden.

Gemäß einem vierten Aspekt wird eine Firewall für ein Kommunikationsnetzwerk vorgeschlagen, welche eine Vorrichtung gemäß dem ersten Aspekt oder gemäß einer dessen Ausführungsformen integriert. Unter einer Firewall wird ein Netzwerkelement verstanden, welches ein Kommunikationsnetzwerk, einen Teil des Kommunikationsnetzwerks oder einen einzelnen Rechner des Kommunikationsnetzwerks vor unerwünschten Netzwerkzugriffen schützt. Eine Firewall kann ein Sicherungssystem abbilden oder Teil eines Sicherungssystems sein.

Gemäß einem fünften Aspekt wird ein Kommunikationsnetzwerk vorgeschlagen, welches eine Mehrzahl von Endgeräten zur Datenkommunikation und eine Vorrichtung gemäß dem ersten Aspekt oder gemäß einer dessen Ausführungsformen integriert.

Gemäß einem sechsten Aspekt wird ein Verfahren zur Steuerung eines Kommunikationsnetzwerks mit einer Mehrzahl von Endgeräten zur Datenkommunikation vorgeschlagen. Das Verfahren umfasst ein Entkoppeln einer Steuerebene und einer Datenebene der Datenkommunikation, und ein Modifizieren zumindest einer von außerhalb des Kommunikationsnetzwerks sichtbaren Eigenschaft des Kommunikationsnetzwerks während einer Kommunikationssitzung unter Nutzung der entkoppelten Steuerebene.

Gemäß einem siebten Aspekt wird ein Computerprogrammprodukt vorgeschlagen, welches auf einer programmgesteuerten Einrichtung die Durchführung des Verfahrens gemäß dem sechsten Aspekt veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Im Weiteren wird die Erfindung anhand von bevorzugten Ausführungsformen unter Bezugnahme auf die beigelegten Figuren näher erläutert.
- Fig. 1: zeigt ein schematisches Blockschaltbild eines ersten Ausführungsbeispiels einer Vorrichtung zur Steuerung eines Kommunikationsnetzwerks;
- Fig. 2: zeigt ein schematisches Blockschaltbild eines zweiten Ausführungsbeispiels einer Vorrichtung zur Steuerung eines Kommunikationsnetzwerks;
- Fig. 3: zeigt ein schematisches Blockschaltbild eines dritten Ausführungsbeispiels einer Vorrichtung zur Steuerung eines Kommunikationsnetzwerks;
- Fig. 4: zeigt ein schematisches Blockschaltbild eines Kommunikationsnetzwerks mit einer Vorrichtung nach einer der Fig. 1 bis 3;
- Fig. 5: zeigt ein schematisches Blockschaltbild einer SDN-Architektur mit entkoppelter Datenebene und Steuerebene zur Implementierung einer Steuereinheit;
- Fig. 6: zeigt ein schematisches Blockschaltbild eines Ausführungsbeispiels eines Routers mit einer Vorrichtung zur Steuerung eines Kommunikationsnetzwerks nach einer der Fig. 1 bis 3;
- Fig. 7: zeigt ein schematisches Blockschaltbild eines Ausführungsbeispiels eines Switches mit einer Vorrichtung zur Steuerung eines Kommunikationsnetzwerks nach einer der Fig. 1 bis 3;
- Fig. 8: zeigt ein schematisches Blockschaltbild eines Ausführungsbeispiels einer Firewall mit einer Vorrichtung zur Steuerung eines Kommunikationsnetzwerks nach einer der Fig. 1 bis 3; und
- Fig. 9: zeigt ein schematisches Ablaufdiagramm eines Ausführungsbeispiels eines Verfahrens zur Steuerung eines Kommunikationsnetzwerks.

In den Figuren sind gleiche oder funktionsgleiche Elemente mit denselben Bezugszeichen versehen, sofern nichts anderes angegeben ist.

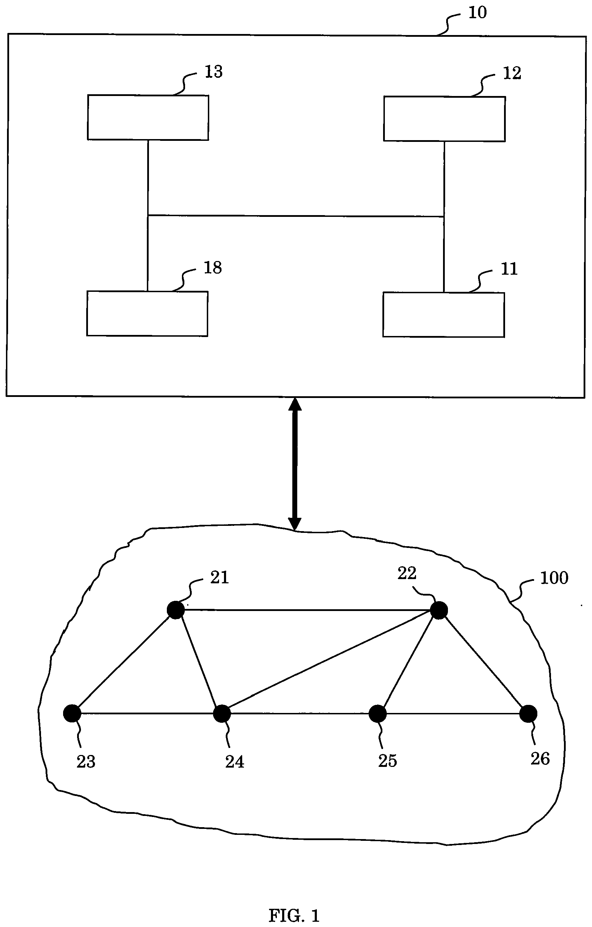

In Fig. 1 ist ein schematisches Blockschaltbild eines ersten Ausführungsbeispiels einer Vorrichtung 10 zur Steuerung eines Kommunikationsnetzwerks 100 dargestellt. Das Kommunikationsnetzwerk 100 umfasst eine Mehrzahl von Endgeräten 21 - 26 zur Datenkommunikation. Die Mehrzahl von Endgeräten 21 - 26 kann Router, Switches, Firewalls, Computer, Personalcomputer, Embedded Systems, Steueranlagen oder dergleichen umfassen. Das Kommunikationsnetzwerk 100 ist beispielsweise ein LAN (Local Area Network) oder ein WAN (Wide Area Network). Die Vorrichtung 10 zur Steuerung des Kommunikationsnetzwerks 100 kann auch als Steuervorrichtung 10 bezeichnet werden.

Das Ausführungsbeispiel der Vorrichtung 10 der Fig. 1 umfasst eine Steuereinheit 11, eine Analyseeinheit 12, eine DNS-Einheit 13 (DNS; Domain Name Server) und eine Schutzeinrichtung 18. Die Steuereinheit 11, die Analyseeinheit 12, die DNS-Einheit 13 und die Schutzeinheit 18 können logisch oder physikalisch gekoppelt oder verbunden sein. Beispielsweise kann die Vorrichtung 10 auch als ein Rechner ausgebildet sein, welcher die Steuereinheit 11, die Analyseeinheit 12, die DNS-Einheit 13 und die Schutzeinrichtung 18 integriert.

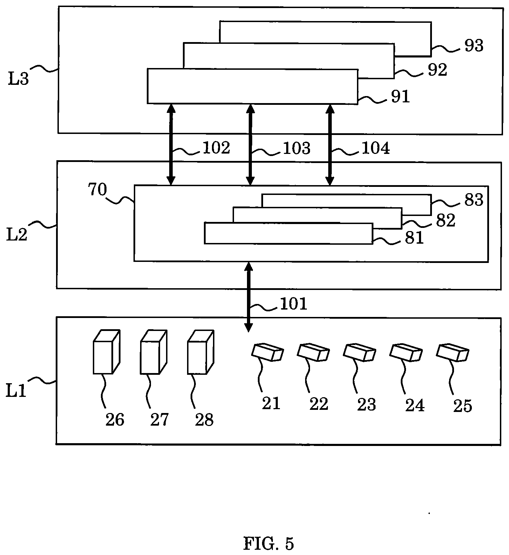

Die Steuereinheit 11 der Vorrichtung 10 ist dazu eingerichtet, eine Datenebene L1 (siehe Fig. 5) und eine Steuerebene L2 (siehe Fig. 5) der Datenkommunikation zu entkoppeln. Die Datenebene L1 (Data Plane) kann auch als Datenschicht oder Daten-Level bezeichnet werden. Die Steuerebene L2 (Control Plane) kann auch als Steuerschicht oder Steuer-Level bezeichnet werden.

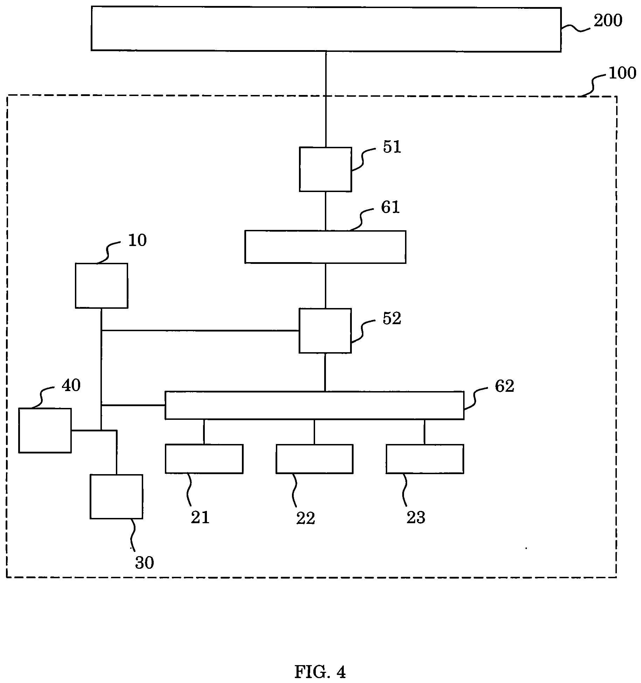

Ferner ist die Steuereinheit 11 dazu eingerichtet, zumindest eine von außerhalb 200 (siehe Fig. 4) des Kommunikationsnetzwerks 100 sichtbare Eigenschaft des Kommunikationsnetzwerk 100 unter Nutzung der entkoppelten Steuerebene L2 zu modifizieren. Mit außerhalb des Kommunikationsnetzwerks 100 ist beispielhaft eine Einrichtung, zum Beispiel ein Rechner, gemeint, welche im Internet 200 (siehe Fig. 4) angeordnet ist und gegenüber dem Kommunikationsnetzwerk 100 nicht autorisiert und/oder nicht authentifiziert ist.

Beispiele für die zumindest eine Eigenschaft des Kommunikationsnetzwerks 100, welche von der Steuereinheit 100 modifizierbar ist, sind die Folgenden: Änderung von virtuellen Adressen von Endgeräten 21 - 26 des Kommunikationsnetzwerks 100, Änderung der Konfiguration des Kommunikationsnetzwerks 100, Änderung des Routingverhaltens des Kommunikationsnetzwerks 100, und/oder Änderung von Applikationen und/oder der Portzuordnungen der Applikationen in dem Kommunikationsnetzwerk 100.

Insbesondere ist die Steuereinheit 11 dazu eingerichtet, das Kommunikationsnetzwerk 100 proaktiv zu modifizieren. Dabei ist die Steuereinheit 11 insbesondere dazu eingerichtet, das Kommunikationsnetzwerk 100 derart proaktiv zu modifizieren, dass unterschiedliche Sicherheitszonen mit unterschiedlichen Sicherheitsstufen in dem Kommunikationsnetzwerk 100 und/oder unterschiedliche Sicherheitsfunktionen in dem Kommunikationsnetzwerk 100 eingerichtet werden. Insbesondere abhängig von einem erkannten Bedrohungsszenario kann die Steuereinheit 11 die eingerichteten Sicherheitszonen und damit die Konfiguration des Kommunikationsnetzwerks 100 ändern.

Ferner kann die Steuereinheit 11 dazu eingerichtet sein, einen von dem Kommunikationsnetzwerk 100 eingesetzten ersten Kryptoalgorithmus während des Betriebs des Kommunikationsnetzwerks 100 durch einen zweiten Kryptoalgorithmus auszutauschen.

Alternativ oder zusätzlich kann die Steuereinheit 11 dazu eingerichtet sein, ein Datenmuster des Kommunikationsnetzwerks 100 zu modifizieren. Ein Beispiel für ein solches Datenmuster des Kommunikationsnetzwerks 100 ist ein Nutzdatenprofil zumindest eines der Endgeräte 21 - 26.

Eine wie oben beschriebene Kommunikationssitzung kann eine Mehrzahl von Transaktionen von Daten (Data Flows) umfassen. Dabei kann die Steuereinheit 11 dazu eingerichtet sein, die zumindest eine von außerhalb 200 des Kommunikationsnetzwerks 100 sichtbare Eigenschaft des Kommunikationsnetzwerks 100 nach einer Teilmenge der Mehrzahl von Transaktionen zu modifizieren. Die Teilmenge der Mehrzahl von Transaktionen kann auch 1 sein, so dass die Steuereinheit 11 die zumindest eine sichtbare Eigenschaft des Kommunikationsnetzwerks 100 nach einer jeden Transaktion modifiziert.

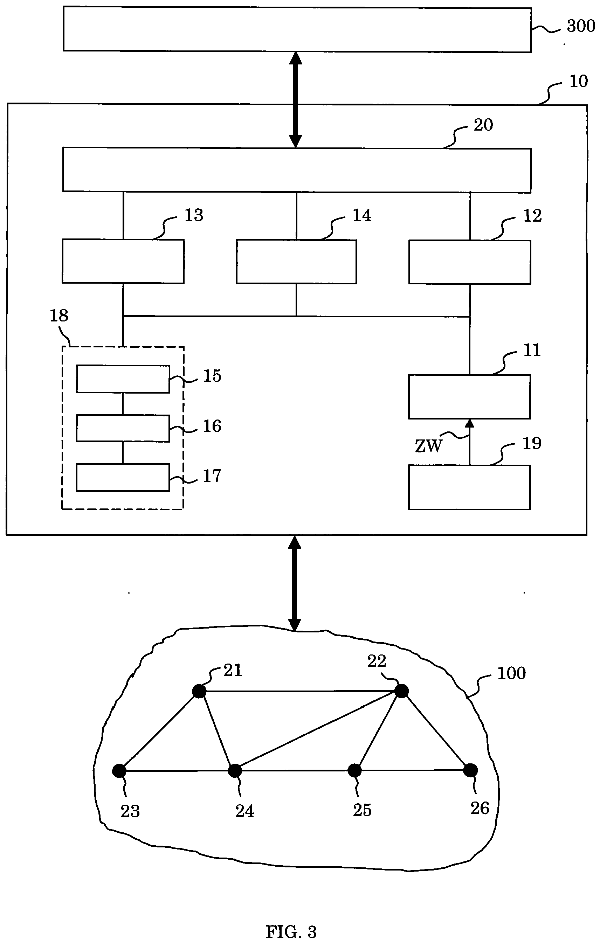

Die Analyseeinheit 12 der Vorrichtung 10 ist vorzugsweise dazu eingerichtet, Analysedaten bei Zugriffen von nicht-autorisierten Einrichtungen auf das Kommunikationsnetzwerk 100 bereitzustellen. Details zu dieser Bereitstellung von Analysedaten für ein mit der Vorrichtung 10 koppelbares Auswertesystem 300 zeigt die Fig. 3, welche weiter unten erläutert werden wird.

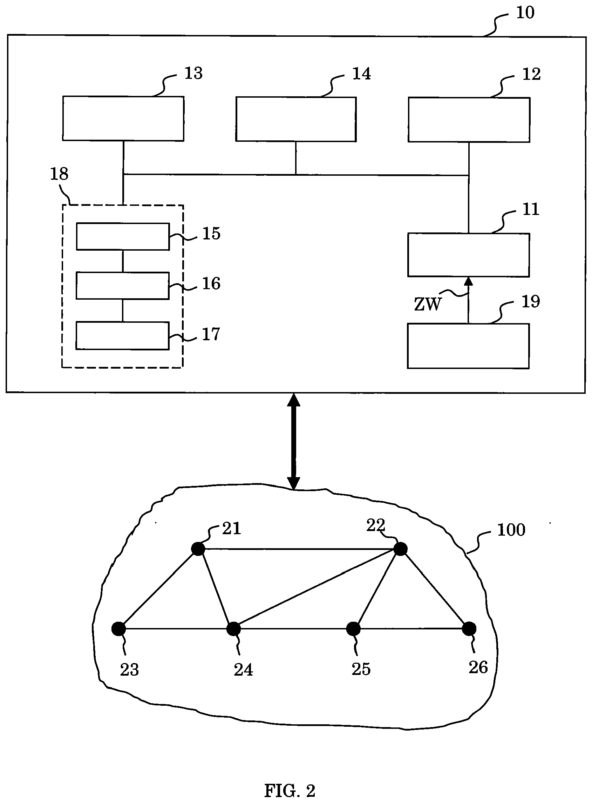

Fig. 2 zeigt ein schematisches Blockschaltbild eines zweiten Ausführungsbeispiels einer Vorrichtung 10 zur Steuerung eines Kommunikationsnetzwerks 100. Das zweite Ausführungsbeispiel der Fig. 2 umfasst sämtliche Merkmale des ersten Ausführungsbeispiels der Fig.1. Ferner hat die Vorrichtung 10 der Fig. 2 eine Datenauswerteinheit 14 und einen Zufallsgenerator 19 zur Bereitstellung eines Zufallswertes ZW. Des Weiteren zeigt die Fig. 2, dass die Schutzeinrichtung 18 eine erste Schutzeinheit 15, eine zweite Schutzeinheit 16 sowie eine dritte Schutzeinheit 17 umfasst.

Die Datenauswerteeinheit 14 ist zur Ermittlung von Statusdaten unter Verwendung der von der Analyseeinheit 12 bereitgestellten Analysedaten eingerichtet. Die Statusdaten geben insbesondere eine Sicherheitslage des Kommunikationsnetzwerks 100 an.

Wie oben ausgeführt, gibt der Zufallszahlengenerator 19 einen Zufallswert ZW aus. Dabei kann die Steuereinheit 11 dazu eingerichtet sein, zum Beispiel eine virtuelle Adresse eines der Endgeräte 21 - 26 in Abhängigkeit des von dem Zufallsgenerator 19 ausgegebenen Zufallswertes ZW zu ändern. Weiter kann der Zufallsgenerator 19 dazu eingerichtet werden, die Steuereinheit 11 zur Modifikation der zumindest einen von außerhalb 200 des Kommunikationsnetzwerks 100 sichtbaren Eigenschaft des Kommunikationsnetzwerks 100 zumindest einmal während der Kommunikationssitzung oder auch mehrmals während des Kommunikationssitzung zufällig oder quasi-zufällig zu triggern.

Wie oben ausgeführt, umfasst die Schutzeinrichtung 18 der Fig. 2 die erste Schutzeinheit 15, die zweite Schutzeinheit 16 und die dritte Schutzeinheit 17. Die erste Schutzeinheit 15 ist zur Detektion, Isolation und Bekämpfung von Zugriffen von nicht-autorisierten Einrichtungen auf das Kommunikationsnetzwerk 100 eingerichtet. Die zweite Schutzeinheit 16 ist zur Warnung und Alarmierung eines mit der Vorrichtung 10 koppelbaren Auswertesystems 300 eingerichtet. Die dritte Schutzeinheit 17 ist zur Wiederherstellung zumindest einer kritischen Netzwerkfunktion des Kommunikationsnetzwerks 100 eingerichtet.

Hierzu zeigt die Fig. 3 ein drittes Ausführungsbeispiel einer Vorrichtung 10 zur Steuerung eines Kommunikationsnetzwerks 100. Das dritte Ausführungsbeispiel der Fig. 3 umfasst sämtliche Merkmale des zweiten Ausführungsbeispiels der Fig. 2. Darüber hinaus umfasst die Vorrichtung 10 der Fig. 3 eine Schnittstelleneinrichtung 20, welche dazu eingerichtet ist, die Vorrichtung 10 mit einem Auswertesystem 300 zu koppeln. Beispielsweise ist die Schnittstelleneinrichtung 20 mit der Analyseeinheit 12, der DNS-Einheit 13 und der Datenauswerteeinheit 14 gekoppelt. Die Schnittstelleneinrichtung 20 kann auch mit weiteren Einheiten der Vorrichtung 10 gekoppelt sein, so zum Beispiel mit der Steuereinheit 11 oder mit dem Zufallsgenerator 19 (nicht gezeigt). So kann beispielsweise der Zufallsgenerator 19 über die Schnittstelleneinrichtung 20 initialisiert werden.

In Fig. 4 ist ein schematisches Blockschaltbild eines Kommunikationsnetzwerks 100 dargestellt. Das Kommunikationsnetzwerk 100 umfasst eine Vorrichtung 10, welche gemäß einem der Ausführungsbeispiele der Fig. 1 bis 3 ausgebildet ist.

Ferner hat das Kommunikationsnetzwerk 100 der Fig. 4 eine Anzahl von Endgeräten 21 - 23. Ohne Einschränkung der Allgemeinheit zeigt das Ausführungsbeispiel der Fig. 4 drei Endgeräte 21 - 23.

Des Weiteren umfasst das Kommunikationsnetzwerk 100 der Fig. 4 einen Router 30, einen Switch 40, eine erste Firewall 51, eine zweite Firewall 52, ein demilitarisiertes LAN 61, welches zwischen der ersten Firewall 51 und der zweiten Firewall 52 gekoppelt ist, und ein internes LAN 62, welches die Mehrzahl der Endgeräte 21 - 23 an die zweite Firewall 52 (interne Firewall) sowie an den Router 30, den Switch 40 als auch an die Vorrichtung 10 koppelt.

Ferner zeigt die Fig. 4, dass das Kommunikationsnetzwerk 100 mit dem Internet 200 koppelbar ist. Oben erwähnte nicht-autorisierte Einrichtungen, die potentiell das Kommunikationsnetzwerk 100 angreifen, sind insbesondere im Internet 200 angeordnet oder mit diesem verbunden.

Fig. 5 zeigt ein schematisches Blockschaltbild einer SDN-Architektur mit entkoppelter Datenebene L1 und Steuerebene L2 zur Implementierung eines Ausführungsbeispiels der Steuereinheit 11.

Die Architektur der Fig. 5 zeigt, dass die Datenebene L1, die Steuerebene L2 und die Anwendungsebene L3 voneinander entkoppelt sind. Die Ebenen oder Schichten L1, L2, L3 sind über APIs 101 - 104 (API; Application Programming Interface) kommunikationstechnisch miteinander verbunden.

Die API 101 kann auch als Southbound-API bezeichnet werden. Beispielsweise ist die Southbound-API 101 mittels OpenFlow implementiert. Die APIs 102 - 104 können auch als Northbound-APIs bezeichnet werden.

In der Datenebene L1 sind physikalische Netzgeräte 21 - 25 und virtuelle Netzgeräte 26 - 28 angeordnet. Die Anzahl und Verteilung der physikalischen Netzwerkgeräte 21 - 25 und virtuellen Netzwerkgeräte 26 - 28 in der Datenebene L1 sind rein beispielhaft.

Die Steuerebene L2 umfasst eine SDN-Steuersoftware 70 mit verschiedenen Netzwerkdiensten 81 - 83 zur Implementierung der Steuereinheit 11.

Die Anwendungsebene L3 umfasst mehrere Anwendungen 91 - 93. Die Anwendungen 91- 93 können auch als Business-Anwendungen bezeichnet werden.

Wie oben ausgeführt, ist die unterste Ebene oder Schicht der SDN-Architektur die Datenebene L1, welche eine Mehrzahl von Netzwerkgeräten 21 - 28 umfasst. In der Steuerebene L2 wird kein Unterschied zwischen physikalischen und virtuellen Netzwerkgeräten 21 - 28 oder Switches gemacht. Aus diesem Grund zählen auch hier die virtuellen Netzwerkgeräte 26 - 28 zur Datenebene L1. Die Kommunikation zwischen der Datenebene L1 und der Steuerebene L2 über die Southbound-Schnittstelle 101 wird durch ein Southbound-Protokoll abgebildet. Dabei ist Voraussetzung, dass die teilnehmenden Netzwerkgeräte 21 - 28 das eingesetzte Southbound-Protokoll beherrschen. Insbesondere müssen die Netzwerkgeräte 21 - 28 nur einen Minimalbefehlsatz des Southbound-Protokolls unterstützen. Zur Implementierung dessen kann OpenFlow eingesetzt werden. Eine Aufgabe des Southbound-Protokolls ist die Umsetzung eines Grundbefehlsatzes zur Manipulation der Flow-Tables in den Switches, um damit die Komplexität und Heterogenität auf der Datenebene L1 transparent zu machen.

Auf der Steuerebene L2 ist die SDN-Kontrollsoftware 70 angeordnet. Diese kann auch als Middleware verstanden werden, welche die Netzwerkgeräte 21 - 28 der Datenebene L1 für SDN-Anwendungen abstrahiert.

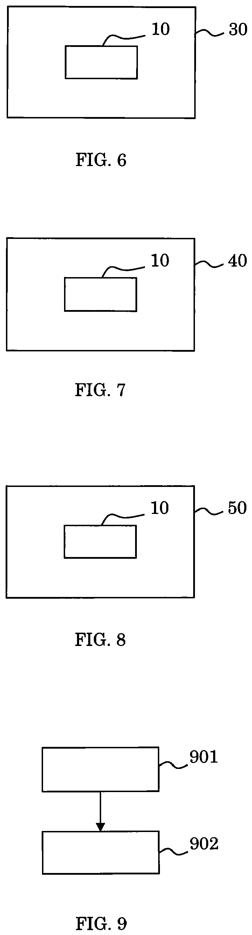

Fig. 6 zeigt ein schematisches Blockschaltbild eines Ausführungsbeispiels eines Routers 30, welcher eine Vorrichtung 10 zur Steuerung eines Kommunikationsnetzwerks 100 integriert. Die Vorrichtung 10 ist beispielsweise gemäß einem der Ausführungsbeispiele der Fig. 1 bis 3 ausgebildet.

Fig. 7 zeigt ein schematisches Blockschaltbild eines Ausführungsbeispiels eines Switchs 40, welcher eine Vorrichtung 10 zur Steuerung eines Kommunikationsnetzwerks 100 integriert. Die Vorrichtung 10 ist beispielsweise gemäß einem der Ausführungsbeispiele der Fig. 1 bis 3 ausgebildet.

Fig. 8 zeigt ein schematisches Blockschaltbild eines Ausführungsbeispiels einer Firewall 50, welche eine Vorrichtung 10 zur Steuerung eines Kommunikationsnetzwerks 100 integriert. Die Vorrichtung 10 ist beispielsweise gemäß einem der Ausführungsbeispiele der Fig. 1 bis 3 ausgebildet.

In Fig. 9 ist ein schematisches Ablaufdiagramm eines Ausführungsbeispiels eines Verfahrens zur Steuerung eines Kommunikationsnetzwerks 100 dargestellt. Das Verfahren der Fig. 9 umfasst die folgenden Schritte 901 und 902.

In Schritt 901 werden eine Datenebene L1 und eine Steuerebene L2 der Datenkommunikation voneinander entkoppelt. Das Ergebnis des Schritts 901 sind eine Steuerebene L2, welche von der Datenebene L1 entkoppelt ist, und eine Datenebene L1, welche von der Steuerebene L2 entkoppelt ist.

In Schritt 902 wird eine von außerhalb des Kommunikationsnetzwerks 100 sichtbare Eigenschaft des Kommunikationsnetzwerks 100 unter Nutzung der entkoppelten Steuerebene L2 modifiziert.

Obwohl die vorliegende Erfindung anhand von Ausführungsbeispielen beschrieben wurde, ist sie vielfältig modifizierbar. Beispielsweise ist es möglich, die Vorrichtung zur Steuerung des Kommunikationsnetzwerks auch in einer anderen wie in den Figuren dargestellten Einrichtung (z. B. Router oder Switch) des Kommunikationsnetzwerks anzuordnen. Des Weiteren ist es auch denkbar, die Vorrichtung zur Steuerung des Kommunikationsnetzwerks außerhalb des Kommunikationsnetzwerks anzuordnen. Ferner ist das Werkzeug OpenMUL zur Implementierung der Steuereinheit der Vorrichtung zur Steuerung des Kommunikationsnetzwerks rein beispielshaft. Auch alternative Werkzeuge können hierfür eingesetzt werden.

### BEZUGSZEICHENLISTE

- 10: Vorrichtung
- 11: Steuereinheit
- 12: Analyseeinheit
- 13: DNS-Einheit
- 14: Datenauswerteeinheit
- 15: erste Schutzeinheit
- 16: zweite Schutzeinheit
- 17: dritte Schutzeinheit
- 18: Schutzeinrichtung
- 19: Zufallsgenerator
- 20: Schnittstelleneinrichtung
- 21: Endgerät
- 22: Endgerät
- 23: Endgerät
- 24: Endgerät
- 25: Endgerät
- 26: Endgerät
- 27: Endgerät
- 28: Endgerät
- 30: Router
- 40: Switch
- 50: Firewall
- 51: Firewall
- 52: Firewall
- 61: LAN
- 62: LAN
- 70: SDN-Steuersoftware
- 81 - 83: Netzwerkdienst
- 91 - 93: Anwendung
- 100: Kommunikationsnetzwerk
- 101: API
- 102: API
- 103: API
- 104: API
- 200: Internet
- 300: Auswertesystem
- L1: Datenebene
- L2: Steuerebene
- L3: Anwendungsebene
- ZW: Zufallswert

### REFERENZEN

[1] http://www.openmul.org/openmul-controller.html
   (abrufbar zum Anmeldetag)
[2] Nick McKeown et al.: OpenFlow: Enabling innovation in campus networks, ACM Communications Review, April 2008
[3] http://www.dhs.gov/science-and-technology/csd-mtd (abrufbar zum Anmeldetag)
[4] Software-Defined Networking: The New Norm for Networks, White Paper, Open Networking Foundation, 13. April 2012
[5] Sean Michael Kerner: OpenFlow Inventor Martin Casado on SDN, VMware, and Software Defined Networking Hype, Enterprise Networking Planet, 29. April 2013
[6] RFC7348: Virtual eXtensible Local Area Network (VXLAN): A Framework for Overlaying Virtualized Layer 2 Networks over Layer 3 Networks
[7] RFC791 - Internet Protocol; Ipv4
[8] RFC3513 - Internet Protocol; IPv6
[9] RFC4301 - IPsec
[10] RFC2661 - L2TP
[11] Open-VPN: https://openvpn.net/

## Patentansprüche

1. Vorrichtung (10) zur Steuerung eines Kommunikationsnetzwerks (100) mit einer Mehrzahl von Endgeräten (21 - 28) zur Datenkommunikation, mit:
einer Steuereinheit (11), welche dazu eingerichtet ist, eine Datenebene (L1) und eine Steuerebene (L2) der Datenkommunikation zu entkoppeln und zumindest eine von außerhalb (200) des Kommunikationsnetzwerks (100) sichtbare Eigenschaft des Kommunikationsnetzwerks (100) während einer Kommunikationssitzung unter Nutzung der entkoppelten Steuerebene (L2) proaktiv zu modifizieren,
wobei die Steuereinheit (11) dazu eingerichtet ist, eine virtuelle Adresse zumindest eines der Mehrzahl von Endgeräten (21 - 28) während der Kommunikationssitzung unter Nutzung der entkoppelten Steuerebene (L2) zu ändern,
wobei die Vorrichtung (10) einen Zufallsgenerator (19) zur Ausgabe eines Zufallswertes (ZW) aufweist,
wobei die Steuereinheit (11) dazu eingerichtet ist, die virtuelle Adresse in Abhängigkeit des von dem Zufallsgenerator (19) ausgegebenen Zufallswertes (ZW) zu ändern.

2. Vorrichtung nach Anspruch 1,
**dadurch gekennzeichnet,**
**dass** die Steuereinheit (11) dazu eingerichtet ist, das Kommunikationsnetzwerk (100) derart proaktiv zu modifizieren, dass unterschiedliche Sicherheitszonen mit unterschiedlichen Sicherheitsstufen und/oder unterschiedlichen Sicherheitsfunktionen dynamisch in dem Kommunikationsnetzwerk (100) einrichtbar sind.

3. Vorrichtung nach einem der Ansprüche 1 oder 2,
**dadurch gekennzeichnet,**
**dass** die Steuereinheit (11) dazu eingerichtet ist, die Konfiguration des Kommunikationsnetzwerks (100) während der Kommunikationssitzung unter Nutzung der entkoppelten Steuerebene (L2) zu modifizieren.

4. Vorrichtung nach einem der Ansprüche 1 bis 3,
**dadurch gekennzeichnet,**
**dass** die Steuereinheit (11) dazu eingerichtet ist, ein Routingverhalten des Kommunikationsnetzwerks (100) während der Kommunikationssitzung unter Nutzung der entkoppelten Steuerebene (L2) zu modifizieren.

5. Vorrichtung nach einem der Ansprüche 1 bis 4,
**dadurch gekennzeichnet,**
**dass** die Steuereinheit (11) dazu eingerichtet ist, zumindest eine Applikation des Kommunikationsnetzwerks (100) und/oder eine Portzuordnung der zumindest einen Applikation während der Kommunikationssitzung unter Nutzung der entkoppelten Steuerebene (L2) zu modifizieren.

6. Vorrichtung nach einem der Ansprüche 1 bis 5,
**dadurch gekennzeichnet,**
**dass** die Steuereinheit (11) dazu eingerichtet ist, einen von dem Kommunikationsnetzwerk (100) eingesetzten ersten Kryptoalgorithmus während der Kommunikationssitzung durch einen zweiten Kryptoalgorithmus auszutauschen.

7. Vorrichtung nach einem der Ansprüche 1 bis 6,
**dadurch gekennzeichnet,**
**dass** die Steuereinheit (11) dazu eingerichtet ist, ein Datenmuster des Kommunikationsnetzwerks (100), insbesondere ein Nutzdatenprofil zumindest eines der Endgeräte (21 - 28), zu modifizieren.

8. Vorrichtung nach einem der Ansprüche 1 bis 7,
**dadurch gekennzeichnet,**
**dass** die Kommunikationssitzung eine Mehrzahl von Transaktionen von Daten umfasst, wobei die Steuereinheit (11) dazu eingerichtet ist, die zumindest eine von außerhalb (200) des Kommunikationsnetzwerks (100) sichtbare Eigenschaft des Kommunikationsnetzwerks (100) nach einer Teilmenge der Mehrzahl von Transaktionen zu modifizieren.

9. Vorrichtung nach einem der Ansprüche 1 bis 8,
**dadurch gekennzeichnet,**
**dass** die Kommunikationssitzung eine Mehrzahl von Transaktionen von Daten umfasst, wobei die Steuereinheit (11) dazu eingerichtet ist, die zumindest eine von außerhalb (200) des Kommunikationsnetzwerks (100) sichtbare Eigenschaft des Kommunikationsnetzwerks (100) nach einer jeden der Mehrzahl von Transaktionen zu modifizieren.

10. Vorrichtung nach einem der Ansprüche 1 bis 9,
**dadurch gekennzeichnet,**
**dass** die Steuereinheit (11) dazu eingerichtet ist, die Datenebene (L1) und die Steuerebene (L2) der Datenkommunikation mittels Software-Defined-Networking zu entkoppeln.

11. Vorrichtung nach einem der Ansprüche 1 bis 10,
**gekennzeichnet durch**
einen mit der Steuereinheit (11) gekoppelten Zufallsgenerator (19), welcher dazu eingerichtet ist, die Steuereinheit (11) zur Modifikation der zumindest einen von außerhalb (200) des Kommunikationsnetzwerks (100) sichtbaren Eigenschaft des Kommunikationsnetzwerks (100) zumindest einmal während der Kommunikationssitzung, insbesondere mehrmals während der Kommunikationssitzung, zufällig zu triggern.

12. Vorrichtung nach einem Ansprüche 1 bis 11,
**gekennzeichnet durch**
eine erste Schutzeinheit (15) zur Detektion, Isolation und Bekämpfung von Zugriffen von nicht-autorisierten Einrichtungen auf das Kommunikationsnetzwerk (100).

13. Vorrichtung nach Anspruch 12,
**gekennzeichnet durch**
eine zweite Schutzeinheit (16) zur Warnung und Alarmierung eines mit der Vorrichtung (10) koppelbaren Auswertesystems (300).

14. Vorrichtung nach Anspruch 12 oder 13,
**gekennzeichnet durch**
eine dritte Schutzeinheit (17) zur Wiederherstellung zumindest einer kritischen Netzwerkfunktion.

15. Vorrichtung nach einem der Ansprüche 1 bis 14,
**gekennzeichnet durch**
eine Analyseeinheit (12) zur Bereitstellung von Analysedaten bei Zugriffen von nicht-autorisierten Einrichtungen auf das Kommunikationsnetzwerk (100).

16. Vorrichtung nach Anspruch 15,
**gekennzeichnet durch**
eine Datenauswerteeinheit (14) zur Ermittlung von Statusdaten, welche insbesondere zur Angabe einer Sicherheitslage des Kommunikationsnetzwerks (100) geeignet sind, unter Verwendung der bereitgestellten Analysedaten.

17. Vorrichtung nach Anspruch 15,
**gekennzeichnet durch**
eine Schnittstelleneinrichtung (20) zur Übertragung der Statusdaten an ein mit der Vorrichtung (10) koppelbares Auswertesystem (300).

18. Vorrichtung nach einem der Ansprüche 1 bis 17,
**dadurch gekennzeichnet,**
**dass** das Kommunikationsnetzwerk (100) eine aufeinander aufbauende Schichten umfassende Infrastruktur aufweist, wobei die Steuereinheit (11) als ein eine Schicht-2 und eine Schicht-3 der Infrastruktur überlagerndes, virtuelles Überlagerungs-Netzwerk implementiert ist.

19. Vorrichtung nach einem der Ansprüche 1 bis 18,
**dadurch gekennzeichnet,**
**dass** die Vorrichtung (10) eine Kombination aus einem Sicherheitsprotokoll und einem Tunneling-Protokoll einsetzt.

20. Router (30) für ein Kommunikationsnetzwerk (100), welcher eine Vorrichtung (10) nach einem der Ansprüche 1 bis 19 integriert.

21. Switch (40) für ein Kommunikationsnetzwerk (100), welcher eine Vorrichtung (10) nach einem der Ansprüche 1 bis 19 integriert.

22. Firewall (50) für ein Kommunikationsnetzwerk (100), welche eine Vorrichtung (10) nach einem der Ansprüche 1 bis 19 integriert.

23. Kommunikationsnetzwerk (100), mit:
einer Mehrzahl von Endgeräten (21 - 28) zur Datenkommunikation, und
einer Vorrichtung (10) zur Steuerung des Kommunikationsnetzwerks (100) nach einem der Ansprüche 1 bis 19.

24. Verfahren zur Steuerung eines Kommunikationsnetzwerks (100) mit einer Mehrzahl von Endgeräten (21 - 28) zur Datenkommunikation, mit den Schritten:
Entkoppeln (901) einer Datenebene (L1) und einer Steuerebene (L2) der Datenkommunikation, und
Proaktives Modifizieren (902) zumindest einer von außerhalb (200) des Kommunikationsnetzwerks (100) sichtbaren Eigenschaft des Kommunikationsnetzwerks (100) während einer Kommunikationssitzung unter Nutzung der entkoppelten Steuerebene (L2),
wobei eine virtuelle Adresse zumindest eines der Mehrzahl von Endgeräten (21 - 28) während der Kommunikationssitzung unter Nutzung der entkoppelten Steuerebene (L2) gändert wird,
wobei die virtuelle Adresse in Abhängigkeit eines von einem Zufallsgenerator (19) ausgegebenen Zufallswertes (ZW) gändert wird.

25. Computerprogrammprodukt, welches auf einer programmgesteuerten Einrichtung die Durchführung des Verfahrens nach Anspruch 24 veranlasst.

## Claims

1. A device (10) for controlling a communication network (100) having a plurality of terminals (21 - 28) for a data communication, comprising:
a control unit (11) configured to decouple a data plane (L1) and a control plane (L2) of the data communication and to pro-actively modify at least one characteristic of the communication network (100) which is visible from the outside (200) of the communication network (100) during a communication session using the decoupled control plane (L2),
wherein the control unit (11) is configured to change a virtual address of at least one of the plurality of terminals (21 -28) during the communication session using the decoupled control plane (L2),
wherein the device (10) has a random generator (19) for outputting a random value (ZW),
wherein the control unit (11) is configured to change the virtual address depending on the random value (ZW) outputted by the random generator (19).

2. The device according to claim 1,
**characterized in that**
the control unit (11) is configured to pro-actively modify the communication network (100) such that different security zones having different security levels and/or different security functions are able to be set up dynamically in the communication network (100).

3. The device according to claim 1 or 2,
**characterized in that**
the control unit (11) is configured to modify the configuration of the communication network (100) during the communication session using the decoupled control plane (L2).

4. The device according to any one of the claims 1 to 3,
**characterized in that**
the control unit (11) is configured to modify a routing behavior of the communication network (100) during the communication session using the decoupled control plane (L2).

5. The device according to any one of the claims 1 to 4,
**characterized in that**
the control unit (11) is configured to modify at least one application of the communication network (100) and/or a port mapping of the at least one application during the communication session using the decoupled control plane (L2).

6. The device according to any one of the claims 1 to 5,
**characterized in that**
the control unit (11) is configured to exchange a first crypto-algorithm employed by the communication network (100) with a second crypto-algorithm during the communication session.

7. The device according to any one of the claims 1 to 6,
**characterized in that**
the control unit (11) is configured to modify a data pattern of the communication network (100), particularly a payload data profile of at least one of the terminals (21 - 28).

8. The device according to any one of the claims 1 to 7,
**characterized in that**
the communication session includes a plurality of transactions of data, wherein the control unit (11) is configured to modify the at least one characteristic of the communication network (100), which is visible from the outside (200) of the communication network (100), after a subset of the plurality of transactions.

9. The device according to any one of the claims 1 to 8,
**characterized in that**
the communication session includes a plurality of transactions of data, wherein the control unit (11) is configured to modify the at least one characteristic of the communication network (100), which is visible from the outside (200) of the communication network (100), after each one of the plurality of transactions.

10. The device according to any one of the claims 1 to 9,
**characterized in that**
the control unit (11) is configured to decouple the control plane (L1) and the data plane (L2) of the data communication using software-defined-networking.

11. The device according to any one of the claims 1 to 10,
**characterized by**
a random generator (19) that is coupled to the control unit (11) and configured to randomly trigger the control unit (11) for modifying the at least one characteristic, which is visible from the outside (200) of the communication network (100), at least once during the communication session, more particularly several times during the communication session.

12. The device according to any one of the claims 1 to 11,
**characterized by**
a first protection unit (15) for detecting, isolating, and antagonizing accesses from non-authorized entities on the communication network (100).

13. The device according to claim 12,
**characterized by**
a second protection unit (16) for warning and alerting a determination system (300) which is coupleable to the device (10).

14. The device according to claim 12 or 13,
**characterized by**
a third protection unit (17) for restoring at least one critical network function.

15. The device according to any one of the claims 1 to 14,
**characterized by**
an analyzing unit (12) for providing analyzing data during accesses on the communication network (100) from non-authorized entities.

16. The device according to claim 15,
**characterized by**
a data determination unit (14) for determining status data using the provided analyzing data, the status data being suitable particularly for specifying a security situation of the communication network (100).

17. The device according to claim 15,
**characterized by**
an interface unit (20) for transmitting the status data to a determination system (300) which is couplable to the device (10).

18. The device according to any one of the claims 1 to 17,
**characterized in that**
the communication network (100) comprises an infrastructure of layers that are stacked on one another, wherein the control unit (11) is implemented as a virtual overlay network overlaying a layer-2 and a layer-3 of the infrastructure.

19. The device according to any one of the claims 1 or 18,
**characterized in that**
the device (10) uses a combination of a security protocol and a tunneling-protocol.

20. A router (30) for a communication network (100) which incorporates a device (10) according to any one of the claims 1 to 19.

21. A switch (40) for a communication network (100) which incorporates a device (10) according to any one of the claims 1 to 19.

22. A firewall (50) for a communication network (100) which incorporates a device (10) according to any one of the claims 1 to 19.

23. A communication network (100), comprising:
a plurality of terminals (21 - 28) for data communication, and
a device (10) for controlling the communication network (100) according to any one of the claims 1 to 19.

24. A method for controlling a communication network (100) having a plurality of terminals (21 - 28) for data communication, comprising the steps of:
decoupling (901) of a data plane (L1) and a control plane (L2) of the data communication, and
pro-actively modifying (902) at least one characteristic of the communication network (100) which is visible from the outside (200) of the communication network (100) during a communication session using the decoupled control plane (L2),
wherein a virtual address of at least one of the plurality of terminals (21 - 28) is changed during the communication session using the decoupled control plane (L2),
wherein the virtual address is changed depending on a random value (ZW) outputted by a random generator (19).

25. A computer program product which causes the execution of the method according to claim 24 on a program controlled unit.

## Revendications

1. Dispositif (10) de commande d'un réseau de communication (100) comprenant une pluralité de terminaux (21 - 28) servant à la communication de données, comprenant :
une unité de commande (11) qui est conçue pour découpler un plan de données (L1) et un plan de commande (L2) de la communication de données et modifier proactivement au moins une propriété du réseau de communication (100), visible depuis l'extérieur (200) du réseau de communication (100), pendant une session de communication en utilisant le plan de commande (L2) découplé,
l'unité de commande (11) étant conçue pour modifier une adresse virtuelle d'au moins l'un de la pluralité de terminaux (21 - 28) pendant la session de communication en utilisant le plan de commande (L2) découplé,
le dispositif (10) possédant un générateur de nombres aléatoires (19) destiné à délivrer une valeur aléatoire (ZW),
l'unité de commande (11) étant conçue pour modifier l'adresse virtuelle en fonction de la valeur aléatoire (ZW) délivrée par le générateur de nombres aléatoires (19).

2. Dispositif selon la revendication 1, **caractérisé en ce que** l'unité de commande (11) est conçue pour modifier proactivement le réseau de communication (100) de telle sorte que des zones de sécurité différentes ayant des niveaux de sécurité différents et/ou des fonctions de sécurité différentes peuvent être établies dynamiquement dans le réseau de communication (100).

3. Dispositif selon l'une des revendications 1 ou 2, **caractérisé en ce que** l'unité de commande (11) est conçue pour modifier la configuration du réseau de communication (100) pendant la session de communication en utilisant le plan de commande (L2) découplé.

4. Dispositif selon l'une des revendications 1 à 3, **caractérisé en ce que** l'unité de commande (11) est conçue pour modifier un comportement de routage du réseau de communication (100) pendant la session de communication en utilisant le plan de commande (L2) découplé.

5. Dispositif selon l'une des revendications 1 à 4, **caractérisé en ce que** l'unité de commande (11) est conçue pour modifier au moins une application du réseau de communication (100) et/ou une affectation de port de l'au moins une application pendant la session de communication en utilisant le plan de commande (L2) découplé.

6. Dispositif selon l'une des revendications 1 à 5, **caractérisé en ce que** l'unité de commande (11) est conçue pour remplacer un premier algorithme de cryptage utilisé par le réseau de communication (100) par un deuxième algorithme de cryptage pendant la session de communication.

7. Dispositif selon l'une des revendications 1 à 6, **caractérisé en ce que** l'unité de commande (11) est conçue pour modifier un modèle de données du réseau de communication (100), notamment un profil de données d'utilisateur d'au moins l'un des terminaux (21 - 28).

8. Dispositif selon l'une des revendications 1 à 7, **caractérisé en ce que** la session de communication comprend une pluralité de transactions de données, l'unité de commande (11) étant conçue pour modifier l'au moins une propriété du réseau de communication (100) visible depuis l'extérieur (200) du réseau de communication (100) après une quantité partielle de la pluralité de transactions.

9. Dispositif selon l'une des revendications 1 à 8, **caractérisé en ce que** la session de communication comprend une pluralité de transactions de données, l'unité de commande (11) étant conçue pour modifier l'au moins une propriété du réseau de communication (100) visible depuis l'extérieur (200) du réseau de communication (100) après chacune de la pluralité de transactions.

10. Dispositif selon l'une des revendications 1 à 9, **caractérisé en ce que** l'unité de commande (11) est conçue pour découpler le plan de données (L1) et le plan de commande (L2) de la communication de données au moyen d'une interconnexion en réseau logicielle (« Software-Defined-Networking »).

11. Dispositif selon l'une des revendications 1 à 10, **caractérisé par** un générateur de nombres aléatoires (19) connecté à l'unité de commande (11), lequel est conçu pour déclencher aléatoirement l'unité de commande (11) en vue de modifier l'au moins une propriété du réseau de communication (100) visible depuis l'extérieur (200) du réseau de communication (100) au moins une fois pendant la session de communication, notamment plusieurs fois pendant la session de communication.

12. Dispositif selon l'une des revendications 1 à 11, **caractérisé par** une première unité de protection (15) destinée à la détection, à l'isolation et à la lutte contre les accès des appareils non autorisés au réseau de communication (100).

13. Dispositif selon la revendication 12, **caractérisé par** une deuxième unité de protection (16) destinée à l'avertissement et à l'alarme d'un système d'interprétation (300) qui peut être connecté au dispositif (10).

14. Dispositif selon la revendication 12 ou 13, **caractérisé par** une troisième unité de protection (17) destinée au rétablissement d'au moins une fonction critique du réseau.

15. Dispositif selon l'une des revendications 1 à 14, **caractérisé par** une unité d'analyse (12) destinée à fournir des données d'analyse lors des accès d'appareils non autorisés sur le réseau de communication (100).

16. Dispositif selon la revendication 15, **caractérisé par** une unité d'interprétation de données (14) destinée à déterminer des données d'état qui conviennent notamment pour indiquer une situation de sécurité du réseau de communication (100) en utilisant les données d'analyse fournies.

17. Dispositif selon la revendication 15, **caractérisé par** un appareil d'interface (20) destiné à la transmission des données d'état à un système d'interprétation (300) qui peut être connecté au dispositif (10).

18. Dispositif selon l'une des revendications 1 à 17, **caractérisé en ce que** le réseau de communication (100) possède une infrastructure comportant des couches s'appuyant les unes sur les autres, l'unité de commande (11) étant mise en oeuvre sous la forme d'un réseau de superposition virtuel qui superpose une couche 2 et une couche 3 de l'infrastructure.

19. Dispositif selon l'une des revendications 1 à 18, **caractérisé en ce que** le dispositif (10) utilise une combinaison d'un protocole de sécurité et d'un protocole de tunnellisation.

20. Routeur (30) pour un réseau de communication (100) qui intègre un dispositif (10) selon l'une des revendications 1 à 19.

21. Commutateur (40) pour un réseau de communication (100) qui intègre un dispositif (10) selon l'une des revendications 1 à 19.

22. Pare-feu (50) pour un réseau de communication (100) qui intègre un dispositif (10) selon l'une des revendications 1 à 19.

23. Réseau de communication (100) comprenant :
une pluralité de terminaux (21 - 28) servant à la communication de données, et
un dispositif (10) servant à commander le réseau de communication (100) selon l'une des revendications 1 à 19.

24. Procédé de commande d'un réseau de communication (100) comprenant une pluralité de terminaux (21 - 28) servant à la communication de données, comprenant les étapes :
découplage (901) d'un plan de données (L1) et d'un plan de commande (L2) de la communication de données et
modification proactive (902) d'au moins une propriété du réseau de communication (100), visible depuis l'extérieur (200) du réseau de communication (100),
pendant une session de communication en utilisant le plan de commande (L2) découplé,
une adresse virtuelle d'au moins l'un de la pluralité de terminaux (21 - 28) étant modifiée pendant la session de communication en utilisant le plan de commande (L2) découplé,
l'adresse virtuelle étant modifiée en fonction d'une valeur aléatoire (ZW) délivrée par un générateur de nombres aléatoires (19).

25. Produit de programme informatique qui, sur un appareil programmable, produit la mise en oeuvre du procédé selon la revendication 24.
